Europäisches Patentamt

European Patent Office

Office européen des brevets

(19)

(11) Publication number: 0 095 139
A2

(12) EUROPEAN PATENT APPLICATION

(21) Application number: 83104905.1

(22) Date of filing: 18.05.83

(51) Int. Cl.³: G 10 L 1/10
G 09 B 5/06

(30) Priority: 25.05.82 US 381986
25.05.82 US 381987

(43) Date of publication of application:
30.11.83 Bulletin 83/48

(84) Designated Contracting States:
DE FR GB IT NL

(71) Applicant: TEXAS INSTRUMENTS INCORPORATED
13500 North Central Expressway
Dallas Texas 75265(US)

(72) Inventor: Dittakavi, Ashok
5520 58th Street No. 236
Lubbock Texas 79414(US)

(72) Inventor: Lin, Kun-Shan
8601 Utica Avenue
Lubbock Texas 79424(US)

(72) Inventor: Fernandez, Jose
5520 58th Street No. 124
Lubbock Texas 79414(US)

(72) Inventor: Foster, Bradley N.
5502 Saratoga
Corpus Christi Texas(US)

(74) Representative: Leiser, Gottfried, Dipl.-Ing. et al,
Patentanwälte Prinz, Bunke & Partner Ernsberger
Strasse 19
D-8000 München 60(DE)

(54) Speech synthesis from prosody data and human sound indicia data.

(57) An electronic apparatus provides synthetic speech from a combination of prosody data and human sound indicia data. The combination of prosody data and human sound indicia data may be provided in the form of a bar code (101) read by an optical bar code reader and digitizer (102). A controller (103) receives data from the reader (102) for temporary storage in memory (104). The controller (103) utilizes the data from bar code (101) temporarily stored in the memory (104) together with an allophone library (105) to generate control signals for application to a synthesizer (106). The synthesizer (106) generates speech signals which are made audible via a speaker (107).

Fig. 1

This invention relates generally to learning aids and more particularly to learning aids in which synthesis control data is communicated with the textual material.

Learning aids have become widely accepted in the industry since they exhibit highly desired characteristics such as unlimited patience, self pacing, and are generally challenging and fun for the student.

The current educational system generally relies heavily upon printed material for the communication of the vast majority of information. Due to the ease and economy of paper publication, it has been recognized that learning aids must interface with printed books and material. Once such application is described in the U.S. Patent No. 4,308,017, entitled "Electronic Aid with Picture Book" issued to Laughon et al on December 29, 1981. The Laughon et al patent utilizes a handheld learning aid in connection with a printed book in which certain pictorial elements within the book are referenced and the student is to properly identify the picture.

Certain skills though necessitate the use of synthesized speech to properly create a learning environment. These skills include spelling, reading, and arithmetic since the addition of speech both encourages the student to proceed and allows for efficient testing of certain material (i.e. spelling skills).

Electronic learning aids with speech require extensive engineering so as to create proper parameters for the control of the synthesizer. This engineering effort generates data which is stored in memory for retrieval by the apparatus. The storage of parameters for the synthesis of entire words or phrases requires an extensive memory and therefore is economically restrictive. The storage, typically on a Read Only Memory (ROM), is expensive to create and therefore does not allow the desired flexibility as teaching skills evolve.

Numerous attempts in the past have been made to economically encode synthesis data so as to allow greater latitude in designing learning aids and their accompanying printed material. One such apparatus is described in U. S. Patent No. 3,416,241, entitled "Electroacoustic Language Teaching Device", issued to Dorothea Weitzner on December 17, 1968. The Weitzner patent involves a cabinet which accepts a card. The card is either electromagnetically or electrooptically encoded. The tracks on the card correspond to spoken words which allow the passage of a acoustic transducer for the reproduction of the words. Obviously this approach is extremely limiting since it relies upon the manual movement of the electroacoustic or upon its mechanical movement over the analog track for the regeneration of the previously encoded speech.

More recently the use of bar codes has been utilized in connection with encoding speech data. This approach is discussed by Alfred Freeman in his patent entitled "Manually Controllable Reading Apparatus For Speech Synthesizers", U.S. Patent No. 4,337,375 issued June 29, 1982. The Freeman patent provides bar code encryption of speech data which is directly withdrawn through a bar code reader and utilized by the synthesizer for generation of the word.

A similar approach is currently being utilized by Western Publishing in their product "Connectron".

In either the "Connectron" or the Freeman application each bar code contains discrete elements or segments which correspond to the selected word. This correspondence is typically an identification number so as to reference a particular point in memory for the resynthesis of that particular word. Since each word is disjoint from the rest of the words within the phrase or sentence, the ensuing synthesized speech is robotic or choppy in sound and does not contain proper duration or pitch so as to be lifelike and natural.

The robotic qualities of either the Freeman application or the Connectron product are the resultant of discrete synthesis of words and not sentence reconstruction. Robotic sounds, although generally acceptable in fantasy type or K games, are not acceptable in many situations such as learning aids, translators, and the like. Even for single word

0095139

aids,        translators,       and       the like.   Even for   single word synthesis, a predefined duration or pitch is only appropriate for a limited number of applications.

Additionally, each word must be stored so as to check a limited vocabulary.  This limitation does not allow the flexibility desired or needed by the educational community.

DESCRIPTION OF THE INVENTION

The present invention utilizes a pickup means for receiving an input sequence of data having a first part containing prosody data and a second part containing a sequence of human sound indicia. A control means is responsive to the input sequence and translates the human sound indicia into a corresponding sequence of synthesis parameters. The synthesis parameters are combined with the prosody data to form synthesis control data. The synthesis control data causes a synthesizer to generate human sound.

In this manner, the data is broken into two parts, that is, the prosody part containing intonation, pitch, duration, and other selected phrase characteristics, and a sequence of human sound indicia (preferably allophonic identification numbers). Since the data is broken into two component parts, the prosody part is able to define characteristics for the entire phrase and thereby tailor the sequence of words within the phrase to create a more human sounding synthesis. The prosody data also establishes a secondary meaning connotation for the phrase (i.e. question intonation).

A preferred method of encoding the input sequence of data is by way of bar code, although other methodologies are usable such as magnetic strips, and the like. Preferably the bar code encryption is placed in association with a textual phrase so as to encourage association by the student/operator between the resulting audible speech and the printed textual material. This association encourages reading skills.

Because of the prosody characteristics, the resulting synthesized speech totally eliminates the robotic sounds and permits the speech to carry with it intrinsic accents, emphasis, duration, etc. This permits a rising or falling intonation so as to indicate a question or statement respectively. Robotic sounding speech is incapable of containing this secondary meaning.

Although the preferred sequence of human sound indicia are allophone identification data, the present invention also encompasses the use of word identification numbers or small phrase identification. The use of allophones provides for an unlimited vocabulary so as to allow applicability to a wider range of situations.

The use of allophone and allophone stringing as applied to text is well explained in the article "Text-to-Speech Using LPC Allophone Stringing" by Kun-Shan Lin et al, appearing in IEEE Transactions of Consumer Electronics, Vol. CE-27, May 1981, pages 144-152, incorporated hereinto by reference. The Lin et al article describes a system which performs text-to-speech conversion from English text. The system utilizes a linear predictive coding (LPC) synthesizer chip together with a microprocessor to produce natural sounding speech.

The combining of allophones or phonetic elements is also described in the article "Minimal Rules for Synthesizing Speech" by A. M. Liberman et al, first appearing in the J.ACOUST.SOC.AMER. 31,pages 1490-1499 (1959) incorporated hereinto by reference. The Liberman et al article describes some minimal rules which are to be used when combining phonemic elements together to properly synthesize speech.

The preferred synthesizer is a LPC synthesizer such as described in U.S. Patent No. 4,209,844, entitled "Lattice Filter for Waveform or Speech Synthesis Circuits Using Digital Logic" issued to Brantingham et al on June 24, 1980, incorporated hereinto by reference. The lattice filter of the Brantingham et al patent utilizes a single multiplier and a single adder in a serial arrangement so as to perform a lattice operation.

The invention together with embodiments thereof will be more clearly defined by the following drawings and their accompanying descriptions.

## DRAWINGS IN BRIEF

FIGURE 1 is a block diagram of an embodiment of the invention.

FIGURES 2a and 2b graphically illustrates an embodiment of the bar code target.

FIGURE 3 graphically illustrates another embodiment of the bar code target.

FIGURE 4 is a pictorial diagram of an embodiment of the invention wherein the bar code is in association with a textual phrase.

FIGURES 5a-5e are graphic illustrations of the variation of pitch intonation.

FIGURE 6 is a flow chart diagram of the analysis for duration control.

FIGURE 7 is the preferred embodiment of the decoding to synthesis algorithm.

DRAWINGS IN DETAIL

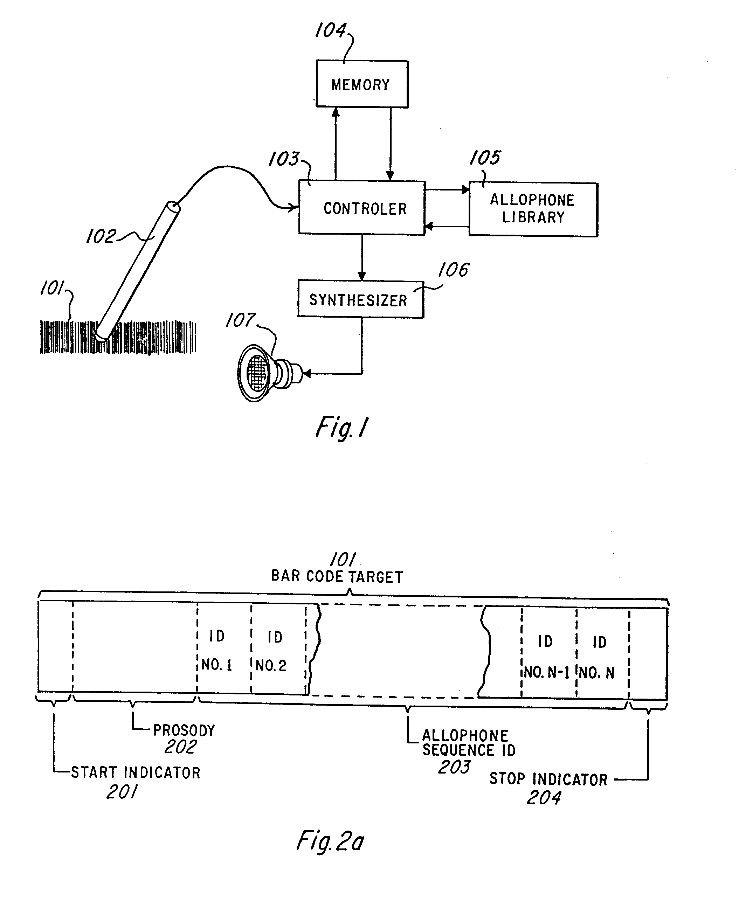

FIGURE 1 is a block diagram of an embodiment invention. Bar code reader and digitizer 102 scans the target 101 and obtains the input sequence of data encoded thereon.

Controller 103 accepts the data from the reader 102 and communicates it to memory 104 for storage and manipulation. Memory 104 preferably a Random Access Memory although other memories are usable and are well known in the art. The allophone indicia derived from the bar code target 101 and stored in memory 104 is utilized by the controller 103 together with the allophone library 105 in generating a sequence of synthesis parameters associated with each of the human sounds corresponding to the indicia. In the preferred embodiment, the synthesis parameters are the filter coefficients associated with a linear predictive filter-type synthesizer.

In one embodiment, after the sequence of parameters is determined, the prosody data is utilized to place the appropriate pitch, duration and other phrase dependent data therein so as to create synthesis control data. This synthesis control data is communicated by the controler 103 to the synthesizer 106 for generation of an audible signal via speaker 107 commensurate with orginally encoded data on the bar code target 101. In the embodiment where the bar code target contains both the prosody and the human sound indicia, the resulting audible signal therefore is more human like and contains the secondary information found in human speech and communicated via the prosody data.

Still another embodiment of the bar code target places the pitch data with its associated sequence of human sound indicia. This embodiment is useful for the reconstitution of discrete words or small phrases.

FIGURE 2a is a block diagram of an encoding scheme for the bar code target 101. A start indicator 201 communicates that the following bar code is broken into prosody, 202, and allophone ID sequence 203. The stop indicator 204 communicates that the total sequence of information has been completed.

The information contained on the bar code 101 is split into two distinct types of information; that is, a prosody component 202 and a sequence allophone indicia 203. This encoding scheme allows for the resulting phrase to contain a more human like quality than simple synthesis of the individual words.

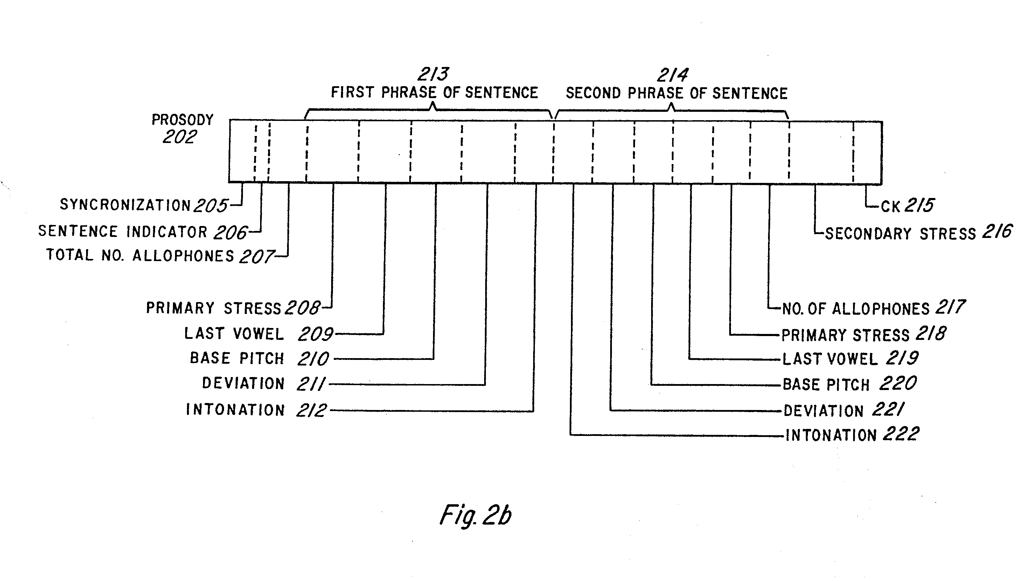

FIGURE 2b is a diagram of the preferred encoding scheme for the prosody component, 202, of the bar code target 101. Housekeeping functions are performed by the data consisting of synchronization, 205, sentence indicator 206, and total number of allophones 207. These three housekeeping functions permit the controller means, 103, to operate more efficiently and with more cognizance of the operation.

Following the housekeeping, data on the first phrase of the sentence, 213, is communicated and consists of the primary stress, 208, the last vowell 209, the base pitch 210, deviation 211, and the rising or falling intonation indicator 212. This data communicates the proper information so that the first phrase of the sentence contains human like qualities and avoids the robotic characteristics.

Thereafter the data associated with the second phrase of the sentence 214, is communicated. The second phrase data consists of the number of allophones therein 217, the primary stress 218, the last vowel 219, base pitch associated with the second phrase 220, deviation 221, and the rising or falling intonation indicator 222.

For both the first phrase of the sentence and the second phrase of the sentence the data defines qualities within the phrase so as to make the resulting audible signal more human like.

The application of two sets of prosody allows the resulting phrase to be varied to include two intonations and inflections. This is particularly useful for longer statements or joined phrases such as--"Is the sky blue?" asked Bob--. Additionally two voices or voice characteristics are usable in the same phrase.

After the second phrase of the sentence, housekeeping is performed over the secondary stress 216 and the check 215. The last housekeeping ties with the first housekeeping so as to maintain prompt coordination for the controller means 103.

This arrangement allows for operator selection of one or a few words within the phrase and to synthesize only these words by passing the reader over the bar code associated with the chosen words and not the prosody component of the phrase.

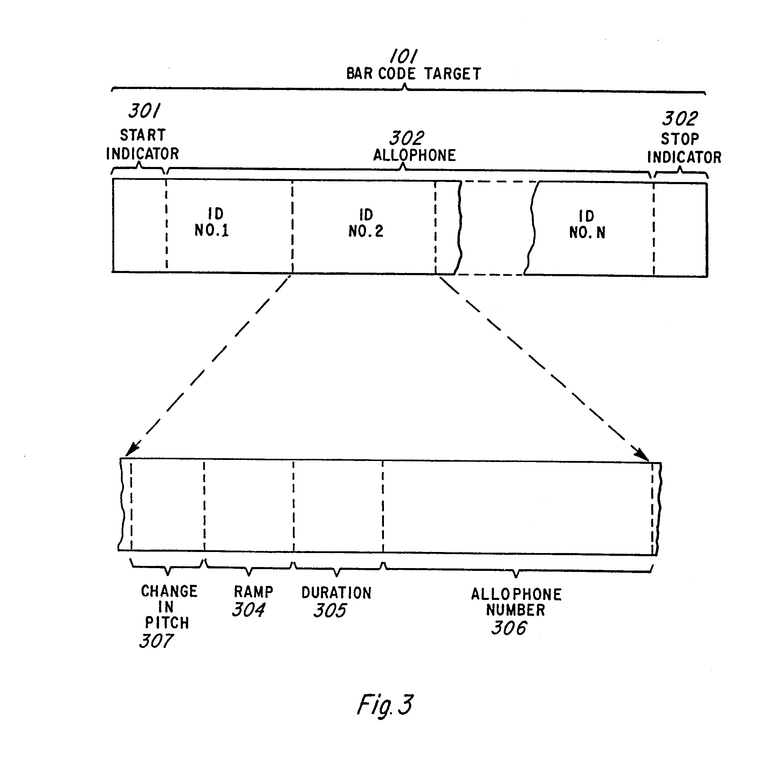

FIGURE 3 illustrates an alternative embodiment of the bar code format. Bar code target 101 consists of the component parts of the start indicator 301, the allophone ID 302, and the stop indicator 303.

The start indicator 301 communicates to the controller that the following bar code is of a type which consists of a sequence of identification numbers. The stop indicator 303 communicates to the controller that the total number of identification numbers has been received.

Each identification number consists of a change in pitch 307, a ramp 304, a duration 305, and the allophone number 306. The change in pitch 307 is indicative of the change in pitch from a base pitch for the initial identification number and thereafter is respective to the prior identification number. An arrangement is made in the indication of duration 305 and ramp 304. In this fashion, the pitch and duration are alterable throughout the allophone sequence. The allophone number 306 communicates the address of the allophone which is desired.

This particular format is beneficial for communicating sounds, songs, numerical figures, pronounciation and words or small phrases since it allows the encoding to carry with it both the duration and pitch parameter and not rely upon one which is defined in manufacturing of the original electronic and the parameters force synthesis.

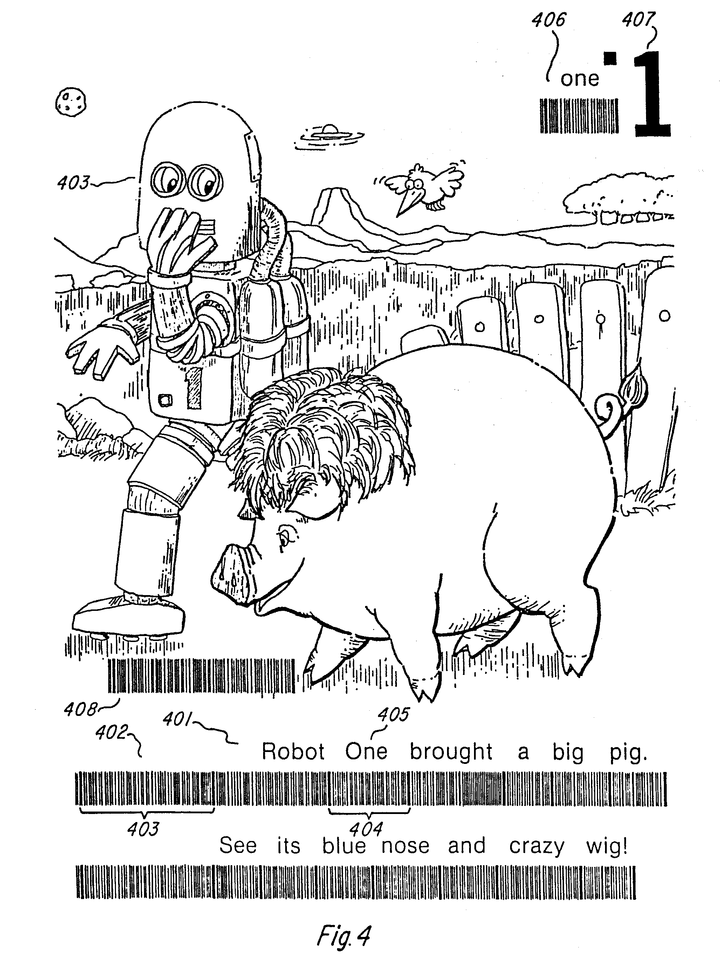

FIGURE 4 is a graphical representation of one application of the invention. In FIGURE 4, graphical illustration, 403 are associated with certain textual phrases 401. Each textual phrase has associated with it a bar code target 402.

The bar code target 402 contains a prosody part 403 and a sequence of allophone indicia thereafter as described in FIGURES 2a and 2b. In this example word 405, "one", is associated with the allophone indicia 404. Pure synthesis of the allophone indicia results in a monotonic audible signal for the word "one". With the aid of the prosody data 403, the entire phrase contains intonation energy, and pitch so as to remove totally the monotonic characteristics associated with individualistic synthesis of the words.

The bar code 406 is associated with the numeric figure 407 and is formated as described in FIGURE 3. By passing the bar code reader across the bar code 406, the word "one" is pronounced. This communicates an audible signal which is associated by the child/student with the figure "1", 407. The same format style is used by target 408 to communicate an audible "oink". Sounds are communicated in this fashion.

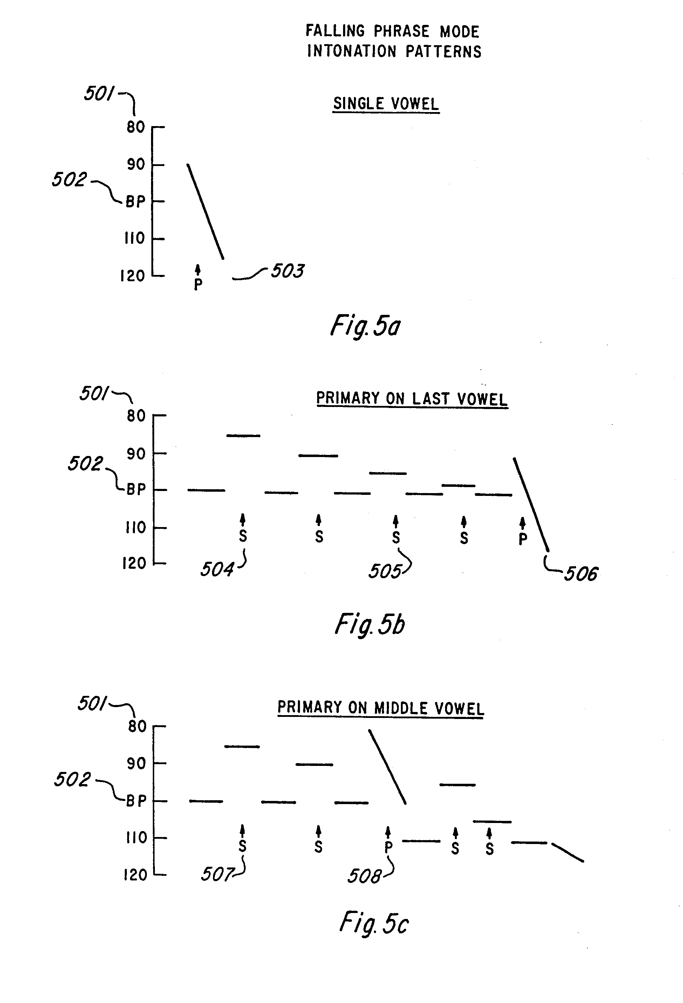

FIGURES 5a-5e illustrate the changing pitch for allophones within the sequence of allophone indicia. FIGURES 5a-5c illustrate a falling phrase mode typically associated with a statement.

FIGURE 5a shows the pitch profile of an allophone string when a single vowel receives the primary stress 503. The pitch of this primary stress starts at a pitch value somewhat higher after the base pitch or average pitch 502 and gradually glides down to a value box pitch and plus deviation. When the primary stress is the last vowel containing multiple vowels, ID pitch profile is shown in figure 5b where the primary stress 506 has the same pitch profile as 503.

The secondary stress 504 receives a pitch value higher than the base pitch 502 and other secondary stresses gradually comes down in pitch from that value. FIGURE 5c shows the situation where the primary stress 508 is in the middle of multiple vowels.

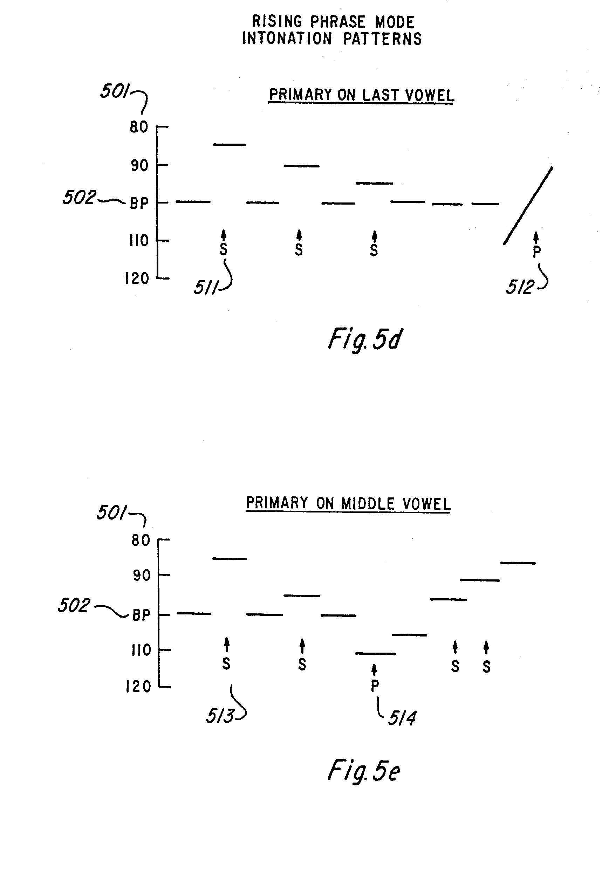

FIGURES 5d-5e illustrate variations of pitch associated with a rising phrase mode operation mode typically associated with a question.

FIGURE 5d sketches the pitch assignment of a rising phrase of which the primary stress is located on the last vowel. The primary stress 512 in this case assumes its starting point at a level lower than the base pitch 502 and gradually glides up. If the primary stress is located on a middle vowel, then it assumes a constant pitch level lower than its base pitch 502, as shown by 514 of FIGURE 5e.

Synthesizing speech using the pitch profiles in FIGURES 5a-5e, an overall down-draft sensation is achieved for phrases that are related to statements or questions that require "yes" or "no" answers while a gradually upward natural pitch feeling is maintained for questions.

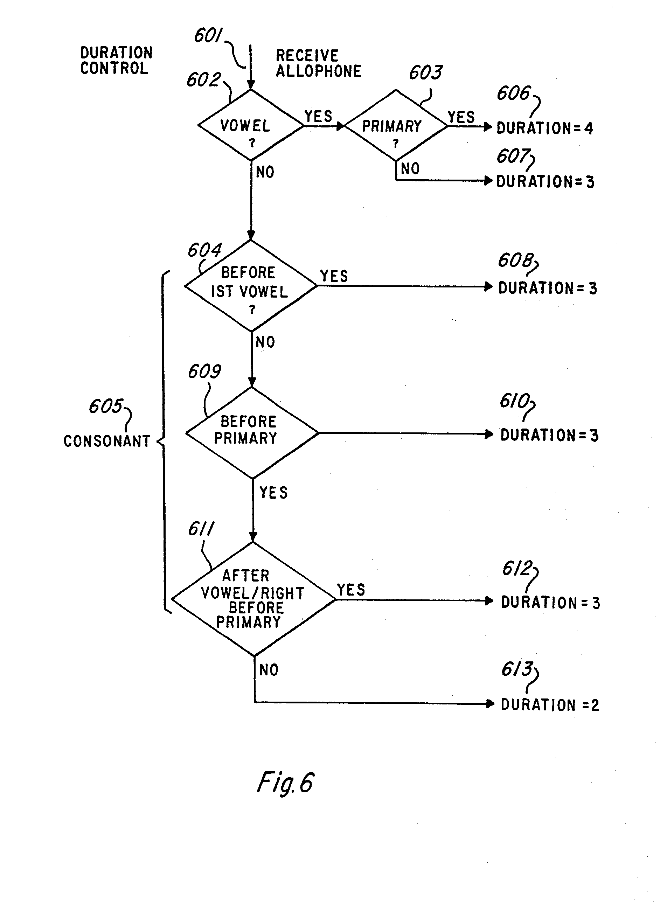

FIGURE 6 is a block diagram of the duration control associated for the allophone decoding. The allophone is received, 601, and a determination is made on if it is a vowel, 602. If it is a vowel a determination is made on if it is a primary stress, 603; otherwise the allophone must be a consonant 605. The determination on if it is a primary stress vowel 603, results in a determination that the duration of four time units 606, or the determination that the duration is three time units 607.

In this example a basic time unit is used in defining the duration for the allophone to be synthesized. It is clear to those in the art that this time unit is variable depending upon the speed of enunciation or upon the speech synthesizer which is used.

In the case of a consonant 605, a determination is made if the the consonant occurred before the first vowel 604. If it occurs before this first vowel, a duration of three time units, 608, is used; otherwise a determination is made on if it is before the primary stress, 609. A determination that is not the primary stress results in a duration of three time units, 610; otherwise a determnation is made on if it occurs after the vowel or right before the primary stress, 611. If this is the situation a duration of three time units 612, is used; otherwise a duration of two time units, 613, is used.

In this fashion, each allophone is analyzed as to its respective position relative to other vowels and the primary stress as dictated by the prosody data for determination as to its appropriate duration. This analysis results in a more human like sound quality to the resulting audible synthesized speech.

0095139

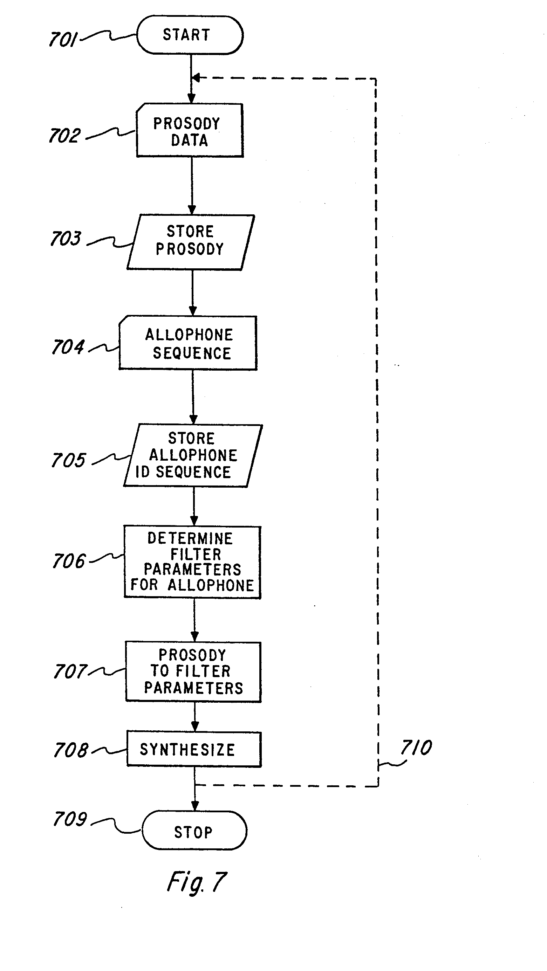

FIGURE 7 is a flow chart diagram of the preferred operation of an embodiment of the invention. After start, 701, the prosody data is read, 702, and stored, 703.

Thereafter the allophone ID sequence, 704 is read and stored, 705, in memory. The filter parameters for each of the allophones associated with the stored allophone ID sequence, 706 is determined and is used when the mapping the prosody data, 707, to the filter parameters. This results in the generation of synthesis control data which is utilized for the synthesis, 708, of an audible signal. Thereafter the operation stops, 709, or alterably returns for further input, 710.

The return for more input allows the synthesizer to be repetitively used for synthesis of a sequence of sentences.

It is clear from the foregoing that the present invention provides an efficient apparatus for the synthesis of speech from encoded data. The speech so synthesized retains the human qualities of intonation and variation within the phrase so as to be more familiar to the operator and to be more communicative of data since it contains the secondary meanings typically indicative of statements or questions formats.

-13- 0095139

WHAT IS CLAIMED IS

1. An electronic apparatus comprising:

   a. pickup means for generating a sequence of input data from a printed representation, each of said input data having prosody data and a human sound indicia therein;

   b. control means for determining a set of synthesis parameters for each of the human sound indicia, and for combining the prosody data associated with the human sound indicia, with the corresponding set of synthesis parameters to form synthesis control data therefrom; and

   c. synthesis means, being responsive to said synthesis control data, for synthesizing human sounds.

2. The electronic apparatus according to claim 1 wherein said pickup means generates said input date in a sequence having a first part containing prosody data and a second part containing a sequence of human sound indicia.

3. The electronic apparatus according to claim 1 further comprised of a memory means for storing a map of the human sound indicia to the sequence of synthesis parameters and wherein said control means communicates with said memory means.

4. The electronic apparatus according to claim 3 wherein said synthesis means includes a linear predictive synthesizer.

5. The electronic apparatus according to claim 3 wherein said prosody data further includes duration and pitch data and wherein said control means includes means for combining said duration and pitch data into said synthesis control data.

6.     The electronic apparatus according to claim 4 wherein said printed representation includes bar code encoding.

7.     The electronic apparatus according to claim 6 wherein said prosody data defines a pitch and duration sequence for the entire phrase.

8.     The electronic apparatus according to claim 1 wherein said pickup means includes a bar code reader apparatus.

9.     A combination comprising:
a communication medium having,

a.     a graphical representation, and

b.     machine readable synthesis data in association with said graphical representation, said synthesis data having a sequence of sets of prosody  and human sound indicia; and

an electronic apparatus having,

a.     pickup means for generating electronic input data being analaguous to said machine readable synthesis data,

b.     control means for determining a set of synthesis parameters for each of the human sound indicia within the sequence of electronic input data, and for combining the prosody  data associated with the human sound indicia with the corresponding set of synthesis parameters to form synthesis control data therefrom, and

c.     synthesis means, being responsive to said synthesis control data, for synthesizing human sounds.

10.     The combination according to claim 9 wherein said machine readable synthesis data is disposed in said sequence of sets wherein each set comprises a sequence of data having a first part containing prosody data and a second part containing a sequence of human sound indicia.

11. The combination according to claim 9 wherein said machine readable synthesis data includes bar code.

12. The combination according to claim 11 wherein said pickup means includes a bar code reader apparatus.

13. The combination according to claim 9 wherein said synthesis means includes a linear predictive synthesizer.

14. The combination according to claim 9 wherein the sequence of sets of the machine readable synthesis data each contain duration data and wherein said control means includes means for incorporating said duration data in said synthesis control data.

15. The combination according to claim 9 wherein said prosody data defines a pitch sequence for the human readable textual phrase.

16. The combination according to claim 9 further comprised of a memory means for storing a map of the human sound indicia to the sequence of synthesis parameters and wherein said control means communicates with said memory means.

*Fig. 1*

*Fig. 2a*

Fig. 2b

2/8

*101*
BAR CODE TARGET

*301*
START
INDICATOR

*302*
ALLOPHONE

*302*
STOP
INDICATOR

ID
NO.1

ID
NO.2

ID
NO. N

CHANGE
IN
PITCH
*307*

RAMP
*304*

DURATION
*305*

ALLOPHONE
NUMBER
*306*

*Fig. 3*

Robot One brought a big pig.

See its blue nose and crazy wig!

Fig. 4

FALLING PHRASE MODE
INTONATION PATTERNS

SINGLE VOWEL

*Fig.5a*

PRIMARY ON LAST VOWEL

*Fig.5b*

PRIMARY ON MIDDLE VOWEL

*Fig.5c*

**RISING PHRASE MODE
INTONATION PATTERNS**

PRIMARY ON LAST VOWEL

*Fig. 5d*

PRIMARY ON MIDDLE VOWEL

*Fig. 5e*

0095139

**DURATION CONTROL**

*601*  RECEIVE ALLOPHONE

*602* **VOWEL ?**
— YES → *603* **PRIMARY ?**
— YES → *606* DURATION = 4
— NO → *607* DURATION = 3

*602* **VOWEL ?** — NO ↓

*604* **BEFORE IST VOWEL ?**
— YES → *608* DURATION = 3
— NO ↓

*605* **CONSONANT**

*609* **BEFORE PRIMARY**
— NO → *610* DURATION = 3
— YES ↓

*611* **AFTER VOWEL/RIGHT BEFORE PRIMARY**
— YES → *612* DURATION = 3
— NO → *613* DURATION = 2

*Fig. 6*

701 — START

702 — PROSODY DATA

703 — STORE PROSODY

704 — ALLOPHONE SEQUENCE

705 — STORE ALLOPHONE ID SEQUENCE

706 — DETERMINE FILTER PARAMETERS FOR ALLOPHONE

707 — PROSODY TO FILTER PARAMETERS

708 — SYNTHESIZE

710

709 — STOP

*Fig. 7*